(19) Europäisches Patentamt / European Patent Office / Office européen des brevets

(11) **EP 3 038 345 B1**

(12) **EUROPEAN PATENT SPECIFICATION**

(45) Date of publication and mention
of the grant of the patent:
**14.09.2022 Bulletin 2022/37**

(21) Application number: **15194854.4**

(22) Date of filing: **17.11.2015**

(51) International Patent Classification (IPC):
***H04N 5/33*** *(2006.01)*

(52) Cooperative Patent Classification (CPC):
**H04N 5/23212; H04N 5/144; H04N 5/23216**

(54) **AUTO-FOCUSING METHOD AND AUTO-FOCUSING DEVICE**

AUTOFOKUSVERFAHREN UND AUTOFOKUSVORRICHTUNG

PROCÉDÉ DE MISE AU POINT AUTOMATIQUE ET DISPOSITIF DE MISE AU POINT AUTOMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2014 CN 201410832108**

(43) Date of publication of application:
**29.06.2016 Bulletin 2016/26**

(73) Proprietor: **Xiaomi Inc.
Beijing 100085 (CN)**

(72) Inventors:
• **BAO, Xiehao
100085 BEIJING (CN)**
• **JIANG, Dongya
100085 BEIJING (CN)**
• **YANG, Wankun
100085 BEIJING (CN)**

(74) Representative: **Cabinet Beau de Loménie
158, rue de l'Université
75340 Paris Cedex 07 (FR)**

(56) References cited:
**US-A1- 2010 141 826     US-A1- 2014 313 339**

**Description**

**TECHNICAL FIELD**

The present invention relates to the technical field of communication terminal, and more particularly, to an auto-focusing method and an auto-focusing device.

**BACKGROUND**

With the development of intelligent terminals, a user may realize various functions through the intelligent terminals, wherein one most common application function is a camera function integrated on the intelligent terminal. A user may shoot anytime and anywhere on interested scenes or persons. When the camera function is enabled, the user, after finding a view through a viewfinder, may employ a manual-focusing manner to perform focusing on the contents of the found view through tapping a certain view-finding target in the viewfinder.

In the related art, if the user moves the viewfinder after the manual-focusing, then the contents of the found view in the viewfinder will change. At this moment, the camera will automatically focus to the center of the viewfinder. However, since there is a deviation between the focal point after re-focusing and the view-finding target focused by the user, the user has to reset the focal point to the view-finding target through performing manual-focusing again, which causes tedious focusing operations and thereby results in poor user experience on shooting.

Document US 2010/141826 discloses a method for focusing a camera on a moving object when detecting touching of a touch area by a user.

Document US 2014/313339 describes an imaging system for a vehicle to capture images and processing them in order to detect an object at or near the vehicle and in the path of travel of the vehicle.

**SUMMARY**

The present invention provides an auto-focusing method and an auto-focusing device, so as to solve the problem of poor user experience on shooting caused by tedious manual-focusing operations in the related arts.

The invention is defined by an auto-focusing method according to claim 1, an auto-focusing device according to claim 6 and a computer program according to claim 11.

Further embodiments are defined by the dependent claims.

It is to be understood that both the foregoing general description and the following detailed description are exemplary and explanatory only and are not restrictive of the invention.

**BRIEF DESCRIPTION OF THE DRAWINGS**

The accompanying drawings, which are incorporated in and constitute a part of this specification, illustrate embodiments consistent with the invention and, together with the description, serve to explain the principles of the invention.

Fig. 1 is a flow chart of an auto-focusing method according to an exemplary embodiment of the present invention.
Fig. 2 is a flow chart of another auto-focusing method according to an exemplary embodiment of the present invention.
Fig. 3 is a schematic diagram showing imaging after completion of focusing by a terminal according to an exemplary embodiment of the present invention.
Fig. 4 is a block diagram of an auto-focusing device according to an exemplary embodiment of the present invention.
Fig. 5 is a block diagram of an examplary auto-focusing device for better understanding
of the present invention.
Fig. 6 is a block diagram of another auto-focusing device according to an exemplary embodiment of the present invention.
Fig. 7 is a block diagram of an exemplary auto-focusing for better understanding of the present invention.
Fig. 8 is a block diagram of an exemplary auto-focusing device for better understanding of the present invention.
Fig. 9 is a block diagram of an exemplary auto-focusing device for better understanding of the present invention.
Fig. 10 is a block diagram of an exemplary auto-focusing device for better understanding of the present invention.
Fig. 11 is a block diagram of another auto-focusing device according to an exemplary embodiment of the present invention.
Fig. 12 is a block diagram of another auto-focusing device according to an exemplary embodiment of the present invention.
Fig. 13 is a structure schematic diagram of an auto-focusing device according to an exemplary embodiment of the present invention.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

The terminology used in the present invention is for the purpose of describing particular embodiments only and is not intended to be limiting of the invention. As used in the present invention and the appended claims, the singular forms "a", "an" and "the" are intended to include the plural forms as well, unless the context clearly indicates otherwise. It should also be understood that the terminology "and/or" as used herein refers to and encompasses any and all possible combinations of one or more of the associated listed items.

It will be understood that, although the terminologies first, second, third etc. may be used herein to describe various information, the information should not be limited by these terminologies. These terms are only used to distinguish the information of the same type from each other. For example, first information could be termed second information, and, similarly, second information could be termed first information, without departing from the scope of the invention. Depending on the context, as used herein, the words "if" can be interpreted as "when ..." or "in response to determining...".

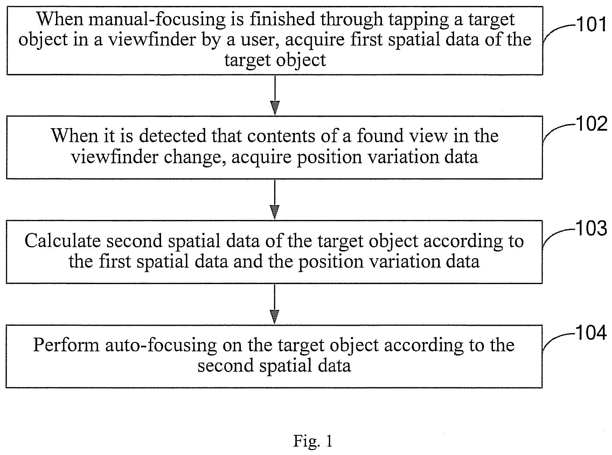

Fig. 1 is a flow chart of an auto-focusing method according to an exemplary embodiment. As shown in Fig. 1, the method is applied in a terminal and may include the following steps.

In step 101, when manual-focusing is finished through tapping a target object in a viewfinder by a user, first spatial data of the target object is acquired.

The terminal in embodiments of the present invention mainly refers to various intelligent terminals that integrate a camera function, for example, a smartphone, a tablet computer, a personal digital assistant (PAD) and the like. A lens set provided on an intelligent terminal and configured to implement the camera function usually adopts a fixed focal length (f), i.e., optical zooming cannot be implemented. During the process of focusing, the terminal changes a distance between the lens set and an image sensor for imaging through moving the lens set to make the distance equal to an image distance (v). That is, a focal plane of the resulted image by the focusing coincides with a vertical plane of the image sensor to make the image clear. At this moment, the focusing is finished.

In the embodiments of the present invention, when a user enables the camera function of a terminal, he may view contents of the found view in the viewfinder to adjust what he wants to shot; moreover, manual-focusing is finished by tapping a certain target object in the viewfinder. After the manual-focusing is finished, the image of the target object is formed on the image sensor. At this moment, the image is clear. After the manual-focusing of the user, if the user moves the viewfinder to re-find a view, i.e., the contents of the found view change, the position of the target object in the viewfinder will change but the target object does not shift out of the viewfinder. In order to make the terminal capable of automatically focusing on the target object under such condition, the first spatial data of the target object is acquired after the manual-focusing is finished. The first spatial data may include first spatial coordinates and first space vector angles. Thus, the first spatial data is used to finish subsequent auto-focusing procedure.

When the first spatial data of the target object is acquired, the terminal firstly calculates a first vertical distance from the focal point to the image sensor, and establishes a three-dimensional rectangular coordinate system with the focal point as an origin. At this moment, since the manual-focusing has been finished, the image of the target object is formed on the image sensor. On the assumption that the image of the target object is located at a first position on the image sensor, first spatial coordinates of the first position in the three-dimensional rectangular coordinate system are acquired. The first spatial coordinates are composed of an X-axis coordinate, a Y-axis coordinate and a Z-axis coordinate, and the Z-axis coordinate value is namely the foregoing first vertical distance. Next, first space vector angles of a first vector between the focal point and the first position is calculated using a vector angle formula in related arts on the basis of the three-dimensional rectangular coordinate system. The first space vector angles include an X-axis included angle between the first vector and the X-axis, an Y-axis included angle between the first vector and the Y-axis, and a Z-axis included angle between the first vector and the Z-axis.

In step 102, when it is detected that contents of a found view in the viewfinder change, position variation data is acquired.

Various sensors having different functions are usually integrated in an intelligent terminal. Two types of such sensors are for example an acceleration sensor and a direction sensor. The acceleration sensor is configured to detect the magnitude and direction of the acceleration experienced by the intelligent terminal, and thus it is possible to judge whether the terminal is rotated. The direction sensor is configured to detect the moving angles of the intelligent terminal in each coordinate axis of a three-dimensional space. For example, the direction sensor may be a gyroscope sensor.

In the embodiment, after the terminal acquires the acceleration data detected through the acceleration sensor, whether the terminal is rotated may be determined according to the acceleration data, and thereby whether the viewfinder moves may be judged (i.e. detected). When it is judged that the viewfinder moves and when the moving stops, vector angles for space variation detected by the direction sensor can be acquired. The space variations of vector angles refer to variations of the current space vector angle with respect to the space vector angles when the manual-focusing is finished, including an X-axis angle variation on the X-axis, a Y-axis angle variation on the Y-axis, and a Z-axis angle variation on the Z-axis.

In step 103, second spatial data of the target object is calculated according to the first spatial data and the position variation data.

The first space vector angles of the first vector between the focal point and the first position are acquired in step 101, and the vector angles for space variation are acquired in step 102. Therefore, in this step, second space vector angles may be calculated according to the first space vector angles and the space variations of vector angles, the second space vector angles are space vector angles of a second vector between the focal point and a second position, and the second position is a position of the image of the target object on the image sensor after the auto-focusing is finished. An X-axis included angle in the second space vector angles is the sum of the X-axis included angles in the first space vector angles and the X-axis angle variation in space variations of the vector angles, a Y-axis included angle in the second space vector angles is the sum of the Y-axis included angles in the first space vector angles and the Y-axis angle variation in the space variations of vector angles, and a Z-axis included angle in the second space vector angle is the sum of the Z-axis included angles in the first space vector angles and the Z-axis angle variation in space variations of vector angles. In step 101, the first spatial coordinates of the first position in the three-dimensional rectangular coordinate system are acquired. Therefore, in this step, a first straight-line distance from the focal point to the first position may be calculated according to the first spatial coordinates, and second spatial coordinates of the second position may be calculated according to the first straight-line distance and the above acquired second space vector angles. The X-axis coordinate value in the second spatial coordinates is acquired through multiplying the first straight-line distance by the cosine value of the X-axis included angle of the second space vector angles, the Y-axis coordinate value in the second spatial coordinates is acquired through multiplying the first straight-line distance by the cosine value of the Y-axis included angle of the second space vector angles, and the Z-axis coordinate value in the second spatial coordinates is acquired through multiplying the first straight-line distance by the cosine value of the Z-axis included angle of the second space vector angles.

In step 104, auto-focusing is performed on the target object according to the second spatial data.

After the second spatial coordinates are acquired in step 103, a second vertical distance from the focal point to the second position may be acquired according to the second spatial coordinate, the second vertical distance is namely the Z-axis coordinate value in the second spatial coordinates, and the sum of the second vertical distance and the fixed focal length is calculated as an adjusted image distance. Then, the terminal moves the lens set until the image of the target object formed is located on the image sensor when a distance from the lens set to the image sensor is the adjusted image distance. At this moment, the image of the target object formed is clear, and the auto-focusing is finished.

According to embodiments of the present invention, before performing of the auto-focusing according to the second spatial data, the second spatial data may also be corrected. That is, when the second spatial data is the second spatial coordinates of the second position, third spatial coordinates of the second position may be calculated through an image recognition algorithm, and the above second spatial coordinates may be corrected according to the third spatial coordinates to acquire corrected second spatial coordinates.

During the specific process of correcting the second spatial coordinates, the terminal may judge whether a distance between the third spatial coordinates and the second spatial coordinates is less than a preset correction threshold. When the distance between the third spatial coordinates and the second spatial coordinates is less than the preset correction threshold, a mean value of the X-axis coordinate values in the third spatial coordinates and the second spatial coordinates is calculated as the X-axis coordinate value in the corrected second spatial coordinates, and a mean value of the Y-axis coordinate values in the third spatial coordinates and the second spatial coordinates is calculated as the Y-axis coordinate value in the corrected second spatial coordinates. Then, the Z-axis coordinate value in the corrected second spatial coordinates may be calculated according to the first straight-line distance, the X-axis coordinate value in the corrected second spatial coordinates, and the Y-axis coordinate value in the corrected second spatial coordinates. The corrected Z-axis coordinate value is namely the foregoing second vertical distance. For example, if it is assumed that the first straight-line distance is L, the corrected X-axis coordinate value is a, the corrected Y-axis coordinate value is b and the corrected Z-axis coordinate value is c, then the above values satisfy an equation: $L2=a2+b2+c2$.

In the foregoing embodiment, during photographing performed using a terminal, the first spatial data of the target object is acquired when the manual-focusing is finished through tapping the target object in the viewfinder by a user, and the position variation data is acquired when it is detected that the contents of the found view in the viewfinder change. After the second spatial data of the target object is calculated according to the first spatial data and the position variation data, the auto-focusing may be finished according to the second spatial data. Therefore, during the photographing process of a user, if the viewfinder moves but the target object does not shift out of the viewfinder, the target object can be automatically focused on. Thus, the embodiment can avoid manual-focusing operations when the contents of the found view change, simplify the focusing operation flows, increase the focusing speed, and accordingly improve the shooting experience of the user. Further, according to the embodiment, the second spatial coordinates may also be corrected through the third spatial coordinates calculated using image recognition algorithm before performing the auto-focusing according to the second spatial coordinates, and thus the auto-focusing accuracy may be further improved.

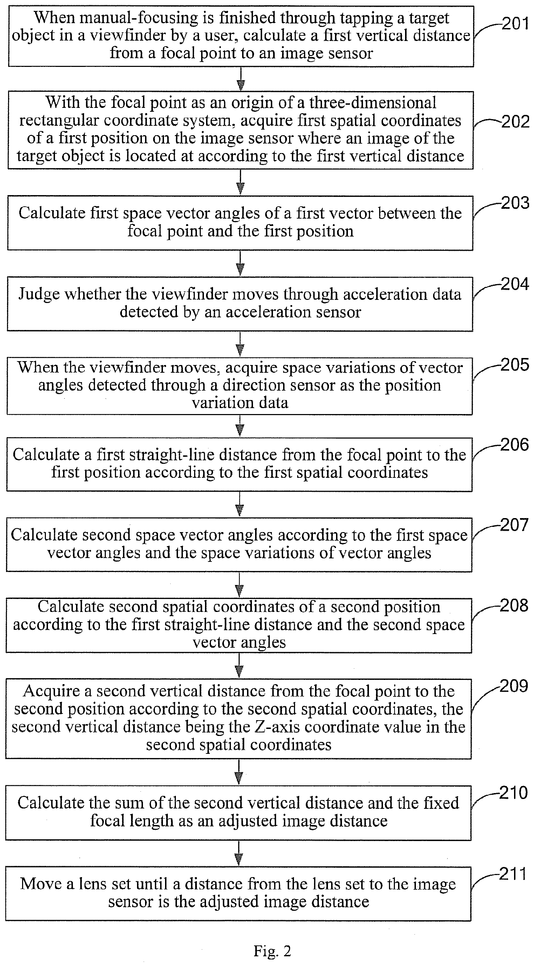

Fig. 2 is a flow chart of another auto-focusing method according to an exemplary embodiment. As shown in Fig. 2, the method can be applied in a terminal and may include the following steps.

In step 201, when manual-focusing is finished through tapping a target object in a viewfinder by a user, a first vertical distance from a focal point to an image sensor is calculated.

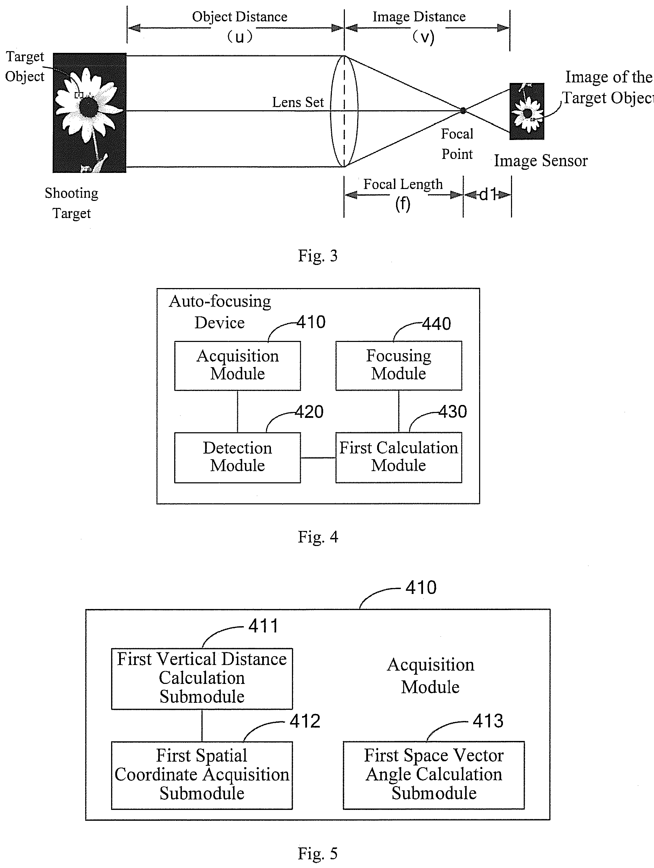

The terminal in embodiments of the present invention mainly refers to various intelligent terminals that integrate a camera function. During the process of imaging through a camera, the focal length (f), the object distance (u) and the image distance (v) satisfy a Gaussian imaging equation, wherein the focal length refers to a distance between a lens set and the focal point, the object distance refers to a distance from a vertical plane in which a shot object is located to the lens set, and the image distance refers to a distance from the image of the shot object to the lens set. Usually, the terminal cannot implement optical zooming, and the lens set of the terminal adopts a fixed focal length f. Therefore, during the process of focusing, the terminal may change the distance between the lens set and the image sensor for imaging through moving the lens set, so that the foregoing distance is equal to v when focusing is finished, and meanwhile the vertical distance from the focal point to the image sensor is d. Fig. 3 is a schematic diagram showing imaging after completion of focusing by a terminal according to an exemplary embodiment of the present invention.

In the embodiment, when a user enables the camera function of a terminal, he may view contents of the found view in the viewfinder to adjust what he wants to shot; moreover, manual-focusing can be finished by tapping a certain target object in the viewfinder, as shown in Fig. 3. After the manual-focusing is finished, the image of the target object is located on the image sensor. At this moment, the image is clear. If it is assumed that the image distance is v1=v and the fixed focal length is f at this moment, then the first vertical distance d1 from the focal point to the image sensor is d1. The calculation equation of d1 is as follows:

$$d1 = v1 - f \qquad \text{Equation (1)}$$

In step 202, with the focal point as an origin of a three-dimensional rectangular coordinate system, first spatial coordinates of a first position on the image sensor where the image of the target object is located are acquired according to the first vertical distance.

In this step, the center of the viewfinder is taken as an origin of a rectangular plane coordinate system firstly, wherein the center of the viewfinder and the focal point are in the same normal direction. At this moment, first two-dimensional coordinates of the target object in the rectangular plane coordinate system are acquired, i.e., P (x, y), and the unit of the first two-dimensional coordinates is pixel (px). Then, a three-dimensional rectangular coordinate system is established with the focal point as the origin. At this moment, since the manual-focusing has been finished, the image of the target object is formed on the image sensor. On the assumption that the image of the target object is formed at the first position P1 on the image sensor, first spatial coordinates of the first position P1 in the three-dimensional rectangular coordinate system are acquired. At this moment, the first two-dimensional coordinates P (x, y) may be translated according to a preset scale based on the size of the viewfinder and the size of the image sensor so as to acquire second two-dimensional coordinates of the image of the target object on the image sensor, which are assumed as (x1, y1). For example, when shooting a picture with a length-to-width ratio of 4 to 3, the pixel size of the viewfinder is 1440*1080, the length and the width of the image sensor are 0.261 inch and 0.196 inch, respectively, and the first two-dimensional coordinates of the target object on the viewfinder are assumed as P (500px, 500px), then the corresponding second two-dimensional coordinates in the three-dimensional rectangular coordinate system are (0.090 inch, 0.090 inch).

Next, the first spatial coordinates P1 (x1, yl, z1) of the image of the target object on the image sensor may be determined according to the second two-dimensional coordinates (x1, y1) and the first vertical distance d1. The X-axis coordinate value in the first spatial coordinates is the X-axis coordinate value x1 in the second two-dimensional coordinates, the Y-axis coordinate value of the first spatial coordinates is the Y-axis coordinate value y1 in the second two-dimensional coordinates, and the Z-axis coordinate value in the first spatial coordinates is the first vertical distance z1=d1.

In step 203, first space vector angles of a first vector between the focal point and the first position are calculated.

After the manual-focusing is finished and the first spatial coordinates of the first position are acquired, the terminal may calculate first space vector angles denoted $(\angle x1, \angle y1, \angle z1)$ from the focal point to the first position P1 through a vector angle formula of the three-dimensional rectangular coordinate system. An X-axis included angle between the first vector and the X-axis is $\angle x1$, a Y-axis included angle between the first vector and the Y-axis is $\angle y1$, and a Z-axis included angle between the first vector and a Z-axis is ∠z1.

In step 204, whether the viewfinder moves is judged through acceleration data detected by an acceleration sensor.

Various sensors having different functions are usually integrated in a terminal, among which an acceleration sensor may be configured to detect the magnitude and the direction of the acceleration experienced by the terminal. In the embodiment, after the manual-focusing is finished and the terminal acquires the acceleration data detected through the acceleration sensor, whether the terminal is rotated may be determined according to the acceleration data, and thereby whether the viewfinder moves may be judged (detected).

In step 205, when the viewfinder moves, vector angles for space variations detected through a direction sensor are acquired as position variation data.

In addition to the acceleration sensor, a direction sensor configured to detect the moving angles of the terminal in each coordinate axis of a three-dimensional space may also be integrated on the terminal. For example, the direction sensor may be a gyroscope sensor.

When it is judged according to the acceleration data that the viewfinder moves in step 204, the vector angles for space variations detected by the direction sensor can be acquired when the movement stops. The space variations of vector angles refer to variations of the current space vector angles with respect to the space vector angles when the manual-focusing is finished, including an X-axis angle variation ($\angle\triangle$x) on the X-axis, a Y-axis angle variation ($\angle\triangle$y) on the Y-axis, and a Z-axis angle variation ($\angle\triangle$z) on the Z-axis.

In step 206, a first straight-line distance from the focal point to the first position is calculated according to the first spatial coordinates.

The first spatial coordinates P1 (x1, y1, z1) are acquired in the step 202. In this step, the first straight-line distance $\rho$ from the focal point to P1 may be calculated according to the coordinates, P1 (x1, yl, z1), wherein the calculation equation of the $\rho$ is as follows:

$$\rho 2 = x12 + y12 + z12 \qquad \text{Equation (2)}$$

In step 207, second space vector angles are calculated according to the first space vector angles and the space variations of vector angles.

In this step, the second space vector angles may be calculated according to the first space vector angles acquired in step 203 and the space variations of vector angles acquired in step 205. The second space vector angles refer to space vector angles of a second vector between the focal point and a second position P2, and the second position P2 is a position of the image of the target object on the image sensor after the terminal finishes the auto-focusing under a situation where the manual-focusing is finished, the contents of the found view in the viewfinder change but the target object does not shift out of the viewfinder.

It is assumed that an X-axis included angle between the second vector and the X-axis is ∠x2, a Y-axis included angle between the second vector and the Y-axis is ∠y2, and a Z-axis included angle between the second vector and the Z-axis is ∠z2. Then the second space vector angles are calculated according to the following equations:

$$\angle x2 = \angle x1 + \angle\triangle x;$$
$$\angle y2 = \angle y1 + \angle\triangle y;$$
$$\angle z2 = \angle z1 + \angle\triangle z; \qquad \text{Equations (3)}$$

In step 208, second spatial coordinates of the second position is calculated according to the first straight-line distance and the second space vector angles.

In this step, the second spatial coordinates P2 (x2, y2, z2) of the second position P2 may be calculated according to the first straight-line distance $\rho$ acquired in step 206 and the second space vector angles ($\angle$x2, $\angle$y2, $\angle$z2) calculated in step 207. The X-axis coordinate value x2 of P2 is acquired through multiplying $\rho$ by the cosine value of ∠x2, the Y-axis coordinate value y2 of P2 is acquired through multiplying $\rho$ by the cosine value of ∠y2, and the Z-axis coordinate value z2 of P2 is acquired through multiplying $\rho$ by the cosine value of ∠z2. That is, the second spatial coordinates may be calculated according to the following equations:

$$x2=\rho\times\cos\angle x2$$
$$y2=\rho\times\cos\angle y2$$
$$z2=\rho\times\cos\angle z2 \qquad \text{Equations (4)}$$

In step 209, a second vertical distance from the focal point to the second position is acquired according to the second spatial coordinates. The second vertical distance is the Z-axis coordinate value in the second spatial coordinate.

The second spatial coordinates P2 (x2, y2, z2) of the second position P2 are acquired in step 208. Therefore, the second vertical distance d2 from the focal point to the second position P2 may be acquired according to the second spatial coordinates, i.e., the second vertical distance d2 is the Z-axis coordinate value z2 in the second spatial coordinates.

It should be noted that, according to the step, in order to realize the auto-focusing after the manual-focusing, the second vertical distance d2 (i.e., z2) needs to be acquired. Therefore, it is possible to only calculate $z2=\rho\times\cos\angle z2$ in Equations (4) in step 208, and accordingly, the direction sensor may only acquire $\angle\Delta z$ in step 205, and it is possible to only calculate $z2=\angle z1+\angle\Delta z$ in step 207 only. Consequently, the computational resources of the terminal can be further saved.

In step 210, the sum of the second vertical distance and the fixed focal length is calculated as an adjusted image distance.

In this step, it is assumed that the adjusted image distance is v2, then the calculation equation of v2 is as follows:

$$v2=d2+f \qquad \text{Equation (5)}$$

In step 211, a lens set is moved until a distance from the lens set to the image sensor is the adjusted image distance.

When the focusing is finished, the distance between the lens set and the image sensor for imaging is equal to the image distance. Therefore, when the adjusted image distance is calculated according to the position of the image of the target object on the image sensor after the auto-focusing in the prior steps, the terminal may perform auto-focusing through controlling the movement of the lens set; when the lens set moves to the position where the distance between the lens set and the image sensor is the adjusted image distance v2, the auto-focusing is finished.

In the foregoing embodiment, during photographing performed using a terminal, after manual-focusing is finished through tapping the target object in the viewfinder by a user, if it is detected that the contents of the found view in the viewfinder change, the image distance after completion of the auto-focusing may be acquired by calculating the spatial data after the position of the target object change, so as to control movement of the lens set to meet the image distance, and thereby the auto-focusing is finished. Therefore, during the photographing process of a user, if the viewfinder moves but the target object does not shift out of the viewfinder, the target object can be automatically focused on. Thus, the embodiment can avoid manual-focusing operations when the contents of the found view change, simplify the focusing operation flows, increase the focusing speed, and accordingly improve the shooting experience of the user.

Corresponding to the foregoing embodiments of the auto-focusing method, the present invention also provides embodiments of an auto-focusing device and a terminal in which the auto-focusing device is applied or embedded.

Fig. 4 is a block diagram of an auto-focusing device according to a according to an exemplary embodiment of the present invention. As shown in Fig. 4, the device includes: an acquisition module 410, a detection module 420, a first calculation module 430 and a focusing module 440.

The acquisition module 410 is configured to, when manual-focusing is finished through tapping a target object in a viewfinder by a user, acquire first spatial data of the target object.

The detection module 420 is configured to, when it is detected that contents of a found view in the viewfinder change, acquire position variation data.

The first calculation module 430 is configured to calculate second spatial data of the target object according to the first spatial data and the position variation data.

The focusing module 440 is configured to perform auto-focusing on the target object according to the second spatial data.

According to the foregoing embodiment, during photographing performed using a terminal, the first spatial data of the target object is acquired when the manual-focusing is finished through tapping the target object in the viewfinder by a user, and the position variation data is acquired when it is detected that the contents of the found view in the viewfinder change. After the second spatial data of the target object is calculated according to the first spatial data and the position variation data, the auto-focusing may be finished according to the second spatial data. Therefore, during the photographing process of a user, if the viewfinder moves but the target object does not shift out of the viewfinder, the target object can be automatically focused on. Thus, the embodiment can avoid manual-focusing operations when the contents of the found view change, simplify the focusing operation flows, increase the focusing speed, and accordingly improve the shooting experience of the user.

Fig. 5 is a block diagram of an exemplary auto-focusing for better understanding of the present invention. As shown in Fig. 5, on the basis of the prior embodiment as shown in Fig. 4, the acquisition module 410 may include: a first vertical distance calculation submodule 411, a first spatial coordinate acquisition submodule 412 and a first space vector angle calculation submodule 413.

The first vertical distance calculation submodule 411 is configured to calculate a first vertical distance from a focal point to an image sensor, wherein an image of the target object is formed on the image sensor when the manual-focusing is finished.

The first spatial coordinate acquisition submodule 412 is configured to acquire first spatial coordinates of a first position on the image sensor where the image of the target object is located according to the first vertical distance with the focal point as an origin of a three-dimensional rectangular coordinate system.

The first space vector angle calculation submodule 413 is configured to calculate first space vector angles of a first vector between the focal point and the first position.

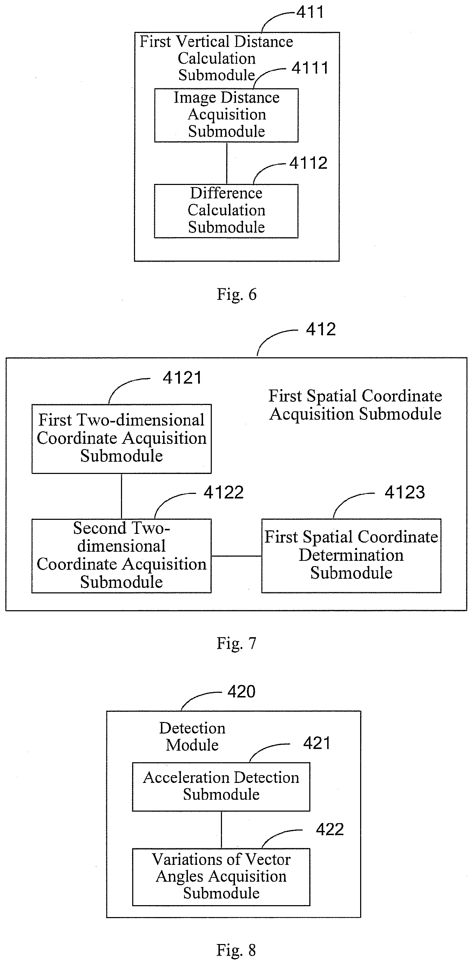

Fig. 6 is a block diagram of another auto-focusing device according to an exemplary embodiment of the present invention. As shown in Fig. 6, on the basis of the prior embodiment as shown in Fig. 5, the first vertical distance calculation submodule 411 may include: an image distance acquisition submodule 4111 and a difference calculation submodule 4112.

The image distance acquisition submodule 4111 is configured to acquire an image distance when the manual-focusing is finished.

The difference calculation submodule 4112 is configured to calculate a difference between the image distance and a fixed focal length as the first vertical distance from the focal point to the image sensor.

Fig. 7 is a block diagram of an exemplary auto-focusing for better understanding of the present invention. As shown in Fig. 7, on the basis of the prior embodiment as shown in Fig. 5, the first spatial coordinate acquisition submodule 412 may include: a first two-dimensional coordinate acquisition submodule 4121, a second two-dimensional coordinate acquisition submodule 4122 and a first spatial coordinate determination submodule 4123.

The first two-dimensional coordinate acquisition submodule 4121 is configured to with a center of the viewfinder as an origin of a rectangular plane coordinate system, acquire first two-dimensional coordinates of the target object in the rectangular plane coordinate system, wherein the center of the viewfinder and the focal point are in the same normal direction.

The second two-dimensional coordinate acquisition submodule 4122 is configured to translate the first two-dimensional coordinates according to a preset scale to acquire second two-dimensional coordinates of the image of the target object on the image sensor.

The first spatial coordinate determination submodule 4123 is configured to determine first spatial coordinates of the image of the target object on the image sensor according to the second two-dimensional coordinates and the first vertical distance, wherein an X-axis coordinate value in the first spatial coordinates is an X-axis coordinate value in the second two-dimensional coordinates, a Y-axis coordinate value in the first spatial coordinates is a Y-axis coordinate value in the second two-dimensional coordinates, and a Z-axis coordinate value in the first spatial coordinates is the first vertical distance.

According to the foregoing embodiment, when acquiring the first spatial data of the target object, by acquiring the image distance after completion of the manual-focusing and acquiring the first spatial coordinates and the first space vector angels of the image of the target object on the image sensor with the focal point as the origin of a three-dimensional rectangular system, the spatial data after the position of the target object changes may be calculated by using the first spatial coordinates and the first space vector angles. Thus, it is possible to realize convenient auto-focusing.

Fig. 8 is a block diagram of an exemplary auto-focusing device for better understanding of the present invention. As shown in Fig. 8, on the basis of the prior embodiment as shown in Fig. 5, the detection module 420 may include: an acceleration detection submodule 421 and a vector angle variation acquisition submodule 422.

The acceleration detection submodule 421 is configured to judge whether the viewfinder moves through acceleration data detected by an acceleration sensor.

The vector angle variation acquisition submodule 422 is configured to, when the viewfinder moves, acquire one or more space variations of vector angles detected through a direction sensor as the position variation data.

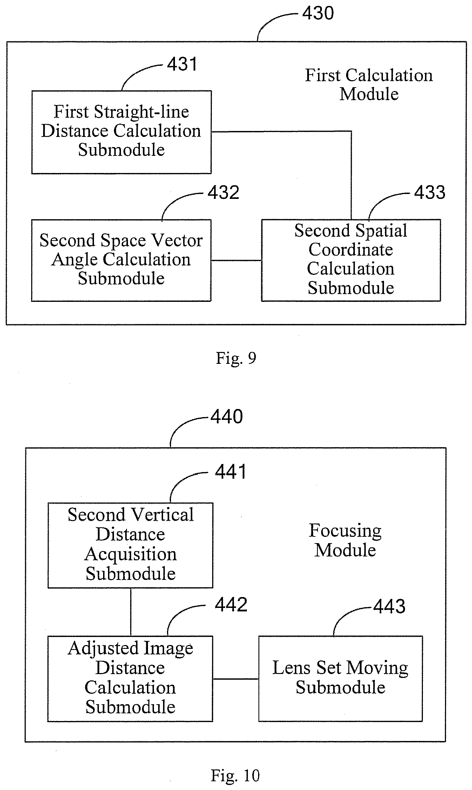

Fig. 9 is a block diagram of an exemplary auto-focusing device for better understanding of the present invention. As shown in Fig. 9, on the basis of the prior embodiment as shown in Fig. 8, the first calculation module 430 may include: a first straight-line distance calculation submodule 431, a second space vector angle calculation submodule 432 and a second spatial coordinate calculation submodule 433.

The first straight-line distance calculation submodule 431 is configured to calculate a first straight-line distance from the focal point to the first position according to the first spatial coordinates.

The second space vector angle calculation submodule 432 is configured to calculate one or more second space vector angles according to one or more of the first space vector angles and one or more of the space variations of vector angles, the one or more second space vector angles being one or more space vector angles of a second vector between the focal point and a second position, and the second position being a position of the image of the target object on the image sensor after the auto-focusing is finished.

The second spatial coordinate calculation submodule 433 is configured to calculate one or more second spatial coordinates of the second position according to the first straight-line distance and the one or more second space vector angles.

Fig. 10 is a block diagram of an exemplary auto-focusing device for better understanding of the present invention. As shown in Fig. 10, on the basis of the prior embodiment as shown in Fig. 9, the focusing module 440 may include: a second vertical distance acquisition submodule 441, an adjusted image distance calculation submodule 442 and a lens set moving submodule 443.

The second vertical distance acquisition submodule 441 is configured to acquire a second vertical distance from the focal point to the second position according to the one or more second spatial coordinates, wherein the second vertical distance is a Z-axis coordinate value in the one or more second spatial coordinates.

The adjusted image distance calculation submodule 442 is configured to calculate the sum of the second vertical distance and the fixed focal length as an adjusted image distance.

The lens set moving submodule 443 is configured to move a lens set until a distance from the lens set to the image sensor is the adjusted image distance.

According to the foregoing embodiment, the acceleration sensor integrated in the terminal may be used to judge whether the viewfinder moves, and when the viewfinder moves, the space variations of vector angles produced by the moving may be detected through the direction sensor. Therefore, the spatial data after the position of the target object changes can be calculated according to the space variations of vector angles, the first spatial coordinates and the first space vector angles to realize auto-focusing.

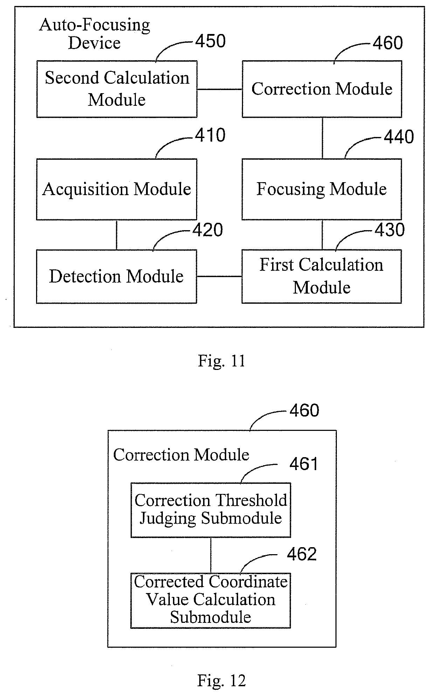

Fig. 11 is a block diagram of another auto-focusing device according to an exemplary embodiment of the present invention. As shown in Fig. 11, on the basis of the prior embodiment as shown in Fig. 9 or 10, the device may further include: a second calculation module 450 and a correction module 460.

The second calculation module 450 is configured to calculate third spatial coordinates of the second position through an image recognition algorithm.

The correction module 460 is configured to correct the second spatial coordinates according to the third spatial coordinates to acquire corrected second spatial coordinates.

Fig. 12 is a block diagram of another auto-focusing device according to an exemplary embodiment of the present invention. As shown in Fig. 12, on the basis of the prior embodiment as shown in Fig. 11, the correction module 460 may include: a correction threshold judging submodule 461 and a corrected coordinate value calculation submodule 462.

The correction threshold judging submodule 461 is configured to judge whether a distance between the third spatial coordinates and the second spatial coordinates is less than a preset correction threshold.

The corrected coordinate value calculation submodule 462 is configured to, when the distance between the third spatial coordinates and the second spatial coordinates is less than the preset correction threshold, calculate a mean value of the X-axis coordinate values in the third spatial coordinates and the second spatial coordinates as the X-axis coordinate value in the corrected second spatial coordinates, calculate a mean value of the Y-axis coordinate values in the third spatial coordinates and the second spatial coordinates as the Y-axis coordinate value in the corrected second spatial coordinates, and calculate the Z-axis coordinate value in the corrected second spatial coordinates according to the first straight-line distance, the X-axis coordinate value in the corrected second spatial coordinates, and the Y-axis coordinate value in the corrected second spatial coordinates.

According to the foregoing embodiment, the second spatial coordinates may also be corrected through the third spatial coordinates calculated using an image recognition algorithm before performing the auto-focusing according to the second spatial coordinates, and thus the auto-focusing accuracy may be further improved.

Accordingly, the present invention also provides another auto-focusing device, including a processor, and a memory for storing instructions executable by the processor; wherein the processor is configured to perform:

when manual-focusing is finished through tapping a target object in a viewfinder by a user, acquiring first spatial data of the target object;
when detecting that contents of a found view in the viewfinder change, acquiring position variation data;
calculating second spatial data of the target object according to the first spatial data and the position variation data; and
performing auto-focusing on the target object according to the second spatial data.

For the detailed implementations of the functions and actions of respective modules in the devices, please see the detailed implementations of corresponding steps in the above methods and repeated descriptions will be omitted here.

With regard to the embodiments of the device, since they are substantially corresponding to the embodiments of the method, reference may be made to the explanations about the embodiments of the method for the related portions. The embodiments of the device described above are only exemplary, wherein the modules illustrated as separation parts may either be or not physically separated, and the parts shown by modules may either be or not physical modules, i.e., the parts may either be located in the same place, or may be distributed over a plurality of network modules. The object of the present invention may be implemented by selecting partial or all the modules herein according to the actual demands. The above contents may be understood and practiced by those skilled in the art without going through creative work.

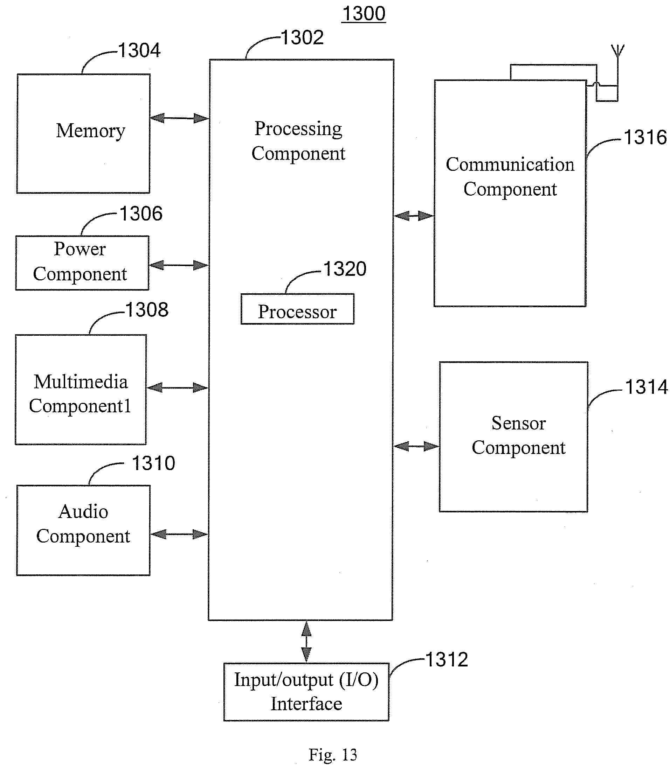

Fig. 13 is a structure schematic diagram of a device 1300 for auto-focusing according to an exemplary embodiment of the present invention. For example, the device 1300 may be a mobile phone having a routing function, a computer, a digital broadcast terminal, a messaging device, a gaming console, a tablet, a medical device, exercise equipment, a personal digital assistant, and the like.

Referring to Fig. 13, the device 1300 may include one or more of the following components: a processing component 1302, a memory 1304, a power component 1306, a multimedia component 1308, an audio component 1310, an input/output (I/O) interface 1313, a sensor component 1314, and a communication component 1316.

The processing component 1302 typically controls overall operations of the device 1300, such as the operations associated with display, telephone calls, data communications, camera operations, and recording operations. The processing component 1302 may include one or more processors 1320 to execute instructions to perform all or part of the steps in the above described methods. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the device 1300. Examples of such data include instructions for any applications or methods operated on the device 1300, contact data, phonebook data, messages, pictures, video, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the device 1300. The power component 1306 may include a power management system, one or more power sources, and any other components associated with the generation, management, and distribution of power in the device 1300.

The multimedia component 1308 includes a screen providing an output interface between the device 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front camera and/or a rear camera. The front camera and/or the rear camera may receive an external multimedia datum while the device 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone ("MIC") configured to receive an external audio signal when the device 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1313 provides an interface between the processing component 1302 and peripheral interface modules, such as a keyboard, a tap wheel, buttons, and the like. The buttons may include, but are not limited to, a home button, a volume button, a starting button, and a locking button.

The sensor component 1314 includes one or more sensors to provide status assessments of various aspects of the device 1300. For instance, the sensor component 1314 may detect an open/closed status of the device 1300, relative positioning of components, e.g., the display and the keypad, of the device 1300, a change in position of the device 1300 or a component of the device 1300, a presence or absence of user contact with the device 1300, an orientation or an acceleration/deceleration of the device 1300, and a change in temperature of the device 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a microwave sensor, or a temperature sensor.

The communication component 1316 is configured to facilitate communication, wired or wirelessly, between the device 1300 and other devices. The device 1300 can access a wireless network based on a communication standard, such as WiFi, 2G, or 3G, or a combination thereof. In one exemplary embodiment, the communication component 1316 receives a broadcast signal or broadcast associated information from an external broadcast management system via a broadcast channel. In one exemplary embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 1304, executable by the processor 1320 in the device 1300, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when an instruction in a storage medium is performed by a processor of a terminal, enables the terminal to perform an auto-focusing method, wherein the method includes: when manual-focusing is finished through tapping a target object in a viewfinder by a user, acquiring first spatial data of the target object; when detecting that contents of a found view in the viewfinder change, acquiring position variation data; calculating second spatial data of the target object according to the first spatial data and the position variation data; and performing auto-focusing on the target object according to the second spatial data.

Other embodiments of the invention will be apparent to those skilled in the art from consideration of the specification and practice of the invention disclosed here. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. An auto-focusing method implemented by a terminal, comprising:

   setting a focal point of a moving lens set of the terminal to a target object by a user tapping said target object in a viewfinder of the terminal; and
   performing a first focusing on the target object based on the focal point to form a first image of the target object on an image sensor of the terminal;
   **characterized in that**, said auto-focusing method further comprises :

   when the first focusing is finished, acquiring (101) first spatial data of the target object, wherein the first spatial data comprises first spatial coordinates of a first position of the first image of the target object on the image sensor and first space vector angles of a first vector, the first vector being between the focal point and the first position ;
   judging (204) whether the viewfinder moves through acceleration data detected by an acceleration sensor;
   when detecting that the viewfinder stops moving after moving due to a movement of the terminal, acquiring (102) space variations of vector angles detected by a direction sensor of the terminal as position variation data, wherein the space variations of vector angles refer to variations between second space vector angles of a second vector and the first space vector angles, and the second vector is between the focal point and a second position;
   calculating (103) second spatial data of the target object according to the first spatial data and the position variation data in order to determine the second position of a second image of the target object on the image sensor; and
   performing (104) auto-focusing on the target object according to the second spatial data,
   wherein the second position is a position of the second image of the target object on the image sensor after the auto-focusing is finished;
   acquiring (101) the first spatial data of the target object comprises:

calculating (201) a first vertical distance between the focal point and the image sensor, wherein the first image of the target object is formed on the image sensor when the first focusing is finished;
acquiring (202) the first spatial coordinates in a three-dimensional rectangular coordinate system with the focal point as an origin according to the first vertical distance; and
calculating (203) the first space vector angles;
wherein calculating (201) the first vertical distance comprises:

acquiring an image distance when the first focusing is finished, wherein the image distance is a distance from the first image of the target object to the lens set; and
calculating a difference between the image distance and a fixed focal length as the first vertical distance;
wherein acquiring (202) the first spatial coordinates according to the first vertical distance comprises:

with a center of the viewfinder as an origin of a rectangular plane coordinate system, acquiring first two-dimensional coordinates of the target object in the rectangular plane coordinate system, wherein the center of the viewfinder and the focal point are on a same line normal to the rectangular plane coordinate system;
translating the first two-dimensional coordinates according to a preset scale to acquire second two-dimensional coordinates of the first image of the target object on the image sensor; and
determining the first spatial coordinates of the first image of the target object on the image sensor according to the second two-dimensional coordinates and the first vertical distance, wherein an X-axis coordinate in the first spatial coordinates is an X-axis coordinate in the second two-dimensional coordinates, a Y-axis coordinate in the first spatial coordinates is a Y-axis coordinate in the second two-dimensional coordinates, and a Z-axis coordinate in the first spatial coordinates is the first vertical distance;
wherein said first space vector angles include an X-axis included angle between the first vector and an X-axis of the three-dimensional rectangular coordinate system, a Y-axis included angle between the first vector and a Y-axis of the three-dimensional rectangular coordinate system, and a Z-axis included angle between the first vector and a Z-axis of the three-dimensional rectangular coordinate system;
wherein the space variations of vector angles comprise an X-axis angle variation on the X-axis, a Y-axis angle variation on the Y-axis, and a Z-axis angle variation on the Z-axis.

2. The method according to claim 1, wherein calculating (103) the second spatial data of the target object according to the first spatial data and the position variation data comprises:

calculating (206) a first straight-line distance from the focal point to the first position according to the first spatial coordinates;
calculating (207) one or more of the second space vector angles according to one or more of the first space vector angles and one or more of the space variations of vector angles; and
calculating (208) one or more second spatial coordinates of the second position according to the first straight-line distance and the one or more of the second space vector angles.

3. The method according to claim 2, wherein performing (104) the auto-focusing on the target object according to the second spatial data comprises:

acquiring (209) a second vertical distance from the focal point to the second position according to the one or more second spatial coordinates, wherein the second vertical distance is a Z-axis coordinate in the one or more second spatial coordinates;
calculating (210) a sum of the second vertical distance and the fixed focal length as an adjusted image distance; and
moving (211) the lens set until a distance from the lens set to the image sensor is the adjusted image distance.

4. The method according to claim 2 or 3, wherein before performing (104) the auto-focusing on the target object according to the second spatial data, the method comprises:

calculating third spatial coordinates of the second position through an image recognition algorithm; and

correcting the second spatial coordinates according to the third spatial coordinates to acquire corrected second spatial coordinates.

5. The method according to claim 4, wherein correcting the second spatial coordinates according to the third spatial coordinates to acquire corrected second spatial coordinates comprises:

judging whether a distance between the third spatial coordinates and the second spatial coordinates is less than a preset correction threshold;

when the distance between the third spatial coordinates and the second spatial coordinates is less than the preset correction threshold, calculating a mean of the X-axis coordinates in the third spatial coordinates and the second spatial coordinates as an X-axis coordinate in the corrected second spatial coordinates, and calculating a mean of the Y-axis coordinates in the third spatial coordinates and the second spatial coordinates as a Y-axis coordinate value in the corrected second spatial coordinates; and

calculating a Z-axis coordinate in the corrected second spatial coordinates according to the first straight-line distance, the X-axis coordinate in the corrected second spatial coordinates, and the Y-axis coordinate in the corrected second spatial coordinates.

6. An auto-focusing device implemented in a terminal, comprising:

a focusing module (440) configured to:

- set a focal point of a moving lens set to a target object, said focal point being set to said target object by a user tapping said target object in a viewfinder of the terminal; and
- perform a first focusing on the target object to form a clear image of the target object on an image sensor of the terminal by moving a lens set of the terminal;

said auto-focusing device being **characterized in that** it further comprises :

an acquisition module (410) configured to, when the first focusing is finished, acquire first spatial data of the target object, wherein the first spatial data comprises first spatial coordinates of a first position of the first image of the target object on the image sensor and first space vector angles of a first vector, the first vector being between the focal point and the first position;

a detection module (420) configured to:

- judge whether the viewfinder moves through acceleration data detected by an acceleration sensor; and
- when it is detected that the viewfinder stops moving after moving due to a movement of the terminal, acquire space variations of vector angles detected by a direction sensor of the terminal as position variation data, wherein the space variations of vector angles refer to variations between second space vector angles of a second vector and the first space vector angles, and the second vector is between the focal point and a second position; and

a first calculation module (430) configured to calculate second spatial data of the target object according to the first spatial data and the position variation data in order to determine the second position of a second image of the target object on the image sensor;

wherein the focusing module (440) is further configured to perform auto-focusing on the target object according to the second spatial data;

wherein the acquisition module (410) comprises:

a first vertical distance calculation submodule (411) configured to calculate a first vertical distance between the focal point and the image sensor, wherein the first image of the target object is formed on the image sensor when the first focusing is finished;

a first spatial coordinate acquisition submodule (412) configured to acquire the first spatial coordinates in a three-dimensional rectangular coordinate system with the focal point as an origin according to the first vertical distance; and

a first space vector angle calculation submodule (413) configured to calculate the first space vector angles;

wherein the first vertical distance calculation submodule (411) comprises:

an image distance acquisition submodule (4111) configured to acquire an image distance when the first focusing is finished, wherein the image distance is a distance from the first image of the target object to the lens set; and

a difference calculation submodule (4112) configured to calculate a difference between the image distance and a fixed focal length as the first vertical distance;

wherein the first spatial coordinate acquisition submodule (412) comprises:

a first two-dimensional coordinate acquisition submodule (4121) configured to acquire first two-dimensional coordinates of the target object in a rectangular plane coordinate system, wherein an origin of the rectangular plane coordinate system is a center of the viewfinder, and the center of the viewfinder and the focal point are on a same line normal to the rectangular plane coordinate system ;

a second two-dimensional coordinate acquisition submodule (4122) configured to translate the first two-dimensional coordinates according to a preset scale to acquire second two-dimensional coordinates of the first image of the target object on the image sensor; and

a first spatial coordinate determination submodule (4123) configured to determine the first spatial coordinates of the first image of the target object on the image sensor according to the second two-dimensional coordinates and the first vertical distance, wherein an X-axis coordinate in the first spatial coordinates is an X-axis coordinate in the second two-dimensional coordinates, a Y-axis coordinate in the first spatial coordinates is a Y-axis coordinate in the second two-dimensional coordinates, and a Z-axis coordinate in the first spatial coordinates is the first vertical distance;

wherein the first space vector angles include an X-axis included angle between the first vector and an X-axis of the three-dimensional rectangular coordinate system, a Y-axis included angle between the first vector and a Y-axis of the three-dimensional rectangular coordinate system, and a Z-axis included angle between the first vector and a Z-axis of the three-dimensional rectangular coordinate system;

wherein the space variations of vector angles comprise an X-axis angle variation on the X-axis, a Y-axis angle variation on the Y-axis, and a Z-axis angle variation on the Z-axis.

7. The auto-focusing device according to claim 6, wherein the first calculation module (430) comprises:

a first straight-line distance calculation submodule (431) configured to calculate a first straight-line distance from the focal point to the first position according to the first spatial coordinates;

a second space vector angle calculation submodule (432) configured to calculate one or more of the second space vector angles according to one or more of the first space vector angles and one or more of the space variations of vector angles; and

a second spatial coordinate calculation submodule (433) configured to calculate one or more second spatial coordinates of the second position according to the first straight-line distance and the one or more of the second space vector angles..

8. The auto-focusing device according to claim 7, wherein the focusing module (440) comprises:

a second vertical distance acquisition submodule (441) configured to acquire a second vertical distance from the focal point to the second position according to the one or more second spatial coordinates, wherein the second vertical distance is a Z-axis coordinate in the one or more second spatial coordinates;

an adjusted image distance calculation submodule (442) configured to calculate a sum of the second vertical distance and the fixed focal length as an adjusted image distance; and

a lens set moving submodule (443) configured to move the lens set until a distance from the lens set to the image sensor is the adjusted image distance.

9. The auto-focusing device according to claim 7 or 8, wherein the auto-focusing device further comprises:

a second calculation module (450) configured to calculate third spatial coordinates of the second position through an image recognition algorithm; and

a correction module (460) configured to correct the second spatial coordinates according to the third spatial coordinates to acquire corrected second spatial coordinates.

10. The auto-focusing device according to claim 9, wherein the correction module (460) comprises:

a correction threshold judging submodule (461) configured to judge whether a distance between the third spatial coordinates and the second spatial coordinates is less than a preset correction threshold; and
a corrected coordinate value calculation submodule (462) configured to, when the distance between the third spatial coordinates and the second spatial coordinates is less than the preset correction threshold, calculate a mean of the X-axis coordinates in the third spatial coordinates and the second spatial coordinates as an X-axis coordinate in the corrected second spatial coordinates, and calculate a mean of the Y-axis coordinates in the third spatial coordinates and the second spatial coordinates as a Y-axis coordinate value in the corrected second spatial coordinates, and calculate a Z-axis coordinate in the corrected second spatial coordinates according to the first straight-line distance, the X-axis coordinate in the corrected second spatial coordinates, and the Y-axis coordinate in the corrected second spatial coordinates.

11. A computer program, which when executed by a processor of an auto-focusing device, causes the processor to perform a method according to any one of the claims 1 to 5.

**Patentansprüche**

1. Verfahren zur automatischen Fokussierung, das von einem Endgerät implementiert ist, umfassend:

Einstellen eines Brennpunkts eines beweglichen Linsensatzes des Endgeräts auf ein Zielobjekt, indem ein Benutzer das Zielobjekt in einem Sucher des Endgeräts antippt, und
Durchführen einer ersten Fokussierung auf das Zielobjekt basierend auf dem Brennpunkt, um ein erstes Bild des Zielobjekts auf einem Bildsensor des Endgeräts zu erzeugen,
**dadurch gekennzeichnet, dass** das Verfahren zur automatischen Fokussierung ferner umfasst:

wenn die erste Fokussierung beendet ist, Erfassen (101) erster räumlicher Daten des Zielobjekts, wobei die ersten räumlichen Daten erste räumliche Koordinaten einer ersten Position des ersten Bildes des Zielobjekts auf dem Bildsensor und erste Raumvektorwinkel eines ersten Vektors umfassen, wobei der erste Vektor zwischen dem Brennpunkt und der ersten Position liegt,
Beurteilen (204) anhand von Beschleunigungsdaten, die von einem Beschleunigungssensor detektiert werden, ob sich der Sucher bewegt,
Erfassen (102) von Raumvariationen von Vektorwinkeln, die von einem Richtungssensor des Endgeräts detektiert werden, als Positionsveränderungsdaten, wenn detektiert wird, dass der Sucher aufhört, sich zu bewegen, nachdem er sich aufgrund einer Bewegung des Endgeräts bewegt hat, wobei sich die Raumvariationen von Vektorwinkeln auf Variationen zwischen zweiten Raumvektorwinkeln eines zweiten Vektors und den ersten Raumvektorwinkeln beziehen und der zweite Vektor zwischen dem Brennpunkt und einer zweiten Position liegt,
Berechnen (103) von zweiten räumlichen Daten des Zielobjekts gemäß den ersten räumlichen Daten und den Positionsänderungsdaten, um die zweite Position eines zweiten Bildes des Zielobjekts auf dem Bildsensor zu bestimmen, und
Durchführen (104) der Autofokussierung auf das Zielobjekt gemäß den zweiten räumlichen Daten,
wobei die zweite Position eine Position des zweiten Bildes des Zielobjekts auf dem Bildsensor ist, nachdem die Autofokussierung beendet ist,
das Erfassen (101) der ersten räumlichen Daten des Zielobjekts umfasst:

Berechnen (201) eines ersten vertikalen Abstands zwischen dem Brennpunkt und dem Bildsensor, wobei das erste Bild des Zielobjekts auf dem Bildsensor erzeugt wird, wenn die erste Fokussierung beendet ist,
Erfassen (202) der ersten räumlichen Koordinaten in einem dreidimensionalen rechtwinkligen Koordinatensystem mit dem Brennpunkt als Ursprung entsprechend dem ersten vertikalen Abstand und
Berechnen (203) des ersten Raumvektorwinkels,
wobei das Berechnen (201) des ersten vertikalen Abstands umfasst:

Erfassen eines Bildabstands, wenn die erste Fokussierung beendet ist, wobei der Bildabstand ein Abstand von dem ersten Bild des Zielobjekts zu dem Objektivsatz ist, und
Berechnen der Differenz zwischen dem Bildabstand und einer festen Brennweite als den ersten vertikalen Abstand,
wobei das Erfassen (202) der ersten räumlichen Koordinaten entsprechend dem ersten vertikalen Abstand umfasst:

mit einem Zentrum des Suchers als Ursprung eines rechtwinkligen ebenen Koordinatensystems, Erfassen erster zweidimensionaler Koordinaten des Zielobjekts in dem rechtwinkligen ebenen Koordinatensystem, wobei das Zentrum des Suchers und der Brennpunkt auf einer gleichen Linie senkrecht zu dem rechtwinkligen ebenen Koordinatensystem liegen,

Verschieben der ersten zweidimensionalen Koordinaten gemäß einem voreingestellten Maßstab, um zweite zweidimensionale Koordinaten des ersten Bildes des Zielobjekts auf dem Bildsensor zu erfassen, und

Bestimmen der ersten räumlichen Koordinaten des ersten Bildes des Zielobjekts auf dem Bildsensor gemäß den zweiten zweidimensionalen Koordinaten und dem ersten vertikalen Abstand,

wobei eine X-Achsenkoordinate in den ersten räumlichen Koordinaten eine X-Achsenkoordinate in den zweiten zweidimensionalen Koordinaten ist, eine Y-Achsenkoordinate in den ersten räumlichen Koordinaten eine Y-Achsenkoordinate in den zweiten zweidimensionalen Koordinaten ist und eine Z-Achsenkoordinate in den ersten räumlichen Koordinaten der erste vertikale Abstand ist,

wobei die ersten Raumvektorwinkel einen X-Achsen-Einschlusswinkel zwischen dem ersten Vektor und einer X-Achse des dreidimensionalen rechtwinkligen Koordinatensystems, einen Y-Achsen-Einschlusswinkel zwischen dem ersten Vektor und einer Y-Achse des dreidimensionalen rechtwinkligen Koordinatensystems und einen Z-Achsen-Einschlusswinkel zwischen dem ersten Vektor und einer Z-Achse des dreidimensionalen rechtwinkligen Koordinatensystems umfassen,

wobei die räumlichen Variationen von Vektorwinkeln eine X-Achsen-Winkelvariation auf der X-Achse, eine Y-Achsen-Winkelvariation auf der Y-Achse und eine Z-Achsen-Winkelvariation auf der Z-Achse umfassen.

2. Verfahren nach Anspruch 1, wobei das Berechnen (103) der zweiten räumlichen Daten des Zielobjekts gemäß den ersten räumlichen Daten und den Positionsänderungsdaten umfasst:

Berechnen (206) eines ersten geradlinigen Abstands vom Brennpunkt zur ersten Position gemäß den ersten Raumkoordinaten,

Berechnen (207) eines oder mehrerer der zweiten Raumvektorwinkel gemäß einem oder mehreren der ersten Raumvektorwinkel und einer oder mehreren der Raumvariationen von Vektorwinkeln und

Berechnen (208) einer oder mehrerer zweiter Raumkoordinaten der zweiten Position gemäß dem ersten geradlinigen Abstand und dem einen oder den mehreren zweiten Raumvektorwinkeln.

3. Verfahren nach Anspruch 2, wobei die Durchführung (104) der Autofokussierung auf das Zielobjekt gemäß den zweiten räumlichen Daten umfasst:

Erfassen (209) eines zweiten vertikalen Abstands von dem Brennpunkt zu der zweiten Position gemäß den einen oder mehreren zweiten Raumkoordinaten, wobei der zweite vertikale Abstand eine Z-Achsenkoordinate in den einen oder mehreren zweiten Raumkoordinaten ist,

Berechnen (210) einer Summe aus dem zweiten vertikalen Abstand und der festen Brennweite als angepasster Bildabstand und

Bewegen (211) des Objektivsatzes, bis der Abstand zwischen dem Objektivsatz und dem Bildsensor dem eingestellten Bildabstand entspricht.

4. Verfahren nach Anspruch 2 oder 3, wobei das Verfahren vor der Durchführung (104) der Autofokussierung auf das Zielobjekt gemäß den zweiten räumlichen Daten umfasst:

Berechnen dritter räumlicher Koordinaten der zweiten Position durch einen Bilderkennungsalgorithmus und Korrektur der zweiten Raumkoordinaten anhand der dritten Raumkoordinaten, um korrigierte zweite Raumkoordinaten zu erfassen.

5. Verfahren nach Anspruch 4, wobei das Korrigieren der zweiten Raumkoordinaten gemäß den dritten Raumkoordinaten zum Erfassen korrigierter zweiter Raumkoordinaten umfasst:

Beurteilen, ob ein Abstand zwischen den dritten Raumkoordinaten und den zweiten Raumkoordinaten kleiner ist als eine vorgegebene Korrekturschwelle,

wenn der Abstand zwischen den dritten Raumkoordinaten und den zweiten Raumkoordinaten kleiner ist als die voreingestellte Korrekturschwelle, Berechnen eines Mittelwertes der X-Achsenkoordinaten in den dritten Raumkoordinaten und den zweiten Raumkoordinaten als X-Achsenkoordinate in den korrigierten zweiten Raumkoordinaten und Berechnen eines Mittelwertes der Y-Achsenkoordinaten in den dritten Raumkoordinaten und den zweiten Raumkoordinaten als Y-Achsenkoordinatenwert in den korrigierten zweiten Raumkoordinaten, und Berechnen einer Z-Achsenkoordinate in den korrigierten zweiten Raumkoordinaten entsprechend dem ersten geradlinigen Abstand, der X-Achsenkoordinate in den korrigierten zweiten Raumkoordinaten und der Y-Achsenkoordinate in den korrigierten zweiten Raumkoordinaten.

**6.** In einem Endgerät implementierte Autofokussierungsvorrichtung, umfassend:

ein Fokussierungsmodul (440), das dazu konfiguriert ist:

- einen Brennpunkt eines beweglichen Linsensatzes auf ein Zielobjekt einzustellen, wobei der Brennpunkt auf das Zielobjekt eingestellt wird, indem ein Benutzer das Zielobjekt in einem Sucher des Endgeräts antippt, und
- eine erste Fokussierung auf das Zielobjekt durchzuführen, um ein klares Bild des Zielobjekts auf einem Bildsensor des Endgeräts zu erzeugen, indem ein Linsensatz des Endgeräts bewegt wird,

wobei die Autofokussierungsvorrichtung ist **dadurch gekennzeichnet, dass** sie ferner umfasst:

ein Erfassungsmodul (410), das dazu konfiguriert ist, wenn die erste Fokussierung beendet ist, erste räumliche Daten des Zielobjekts zu erfassen, wobei die ersten räumlichen Daten erste räumliche Koordinaten einer ersten Position des ersten Bildes des Zielobjekts auf dem Bildsensor und erste Raumvektorwinkel eines ersten Vektors umfassen, wobei der erste Vektor zwischen dem Brennpunkt und der ersten Position liegt,
ein Detektionsmodul (420), das dazu konfiguriert ist:

- anhand der von einem Beschleunigungssensor detektierten Beschleunigungsdaten zu beurteilen, ob sich der Sucher bewegt, und
- wenn detektiert wird, dass der Sucher aufhört, sich zu bewegen, nachdem er sich aufgrund einer Bewegung des Endgeräts bewegt hat, Raumvariationen von Vektorwinkeln, die von einem Richtungssensor des Endgeräts detektiert wurden, als Positionsänderungsdaten zu erfassen, wobei sich die Raumvariationen von Vektorwinkeln auf Variationen zwischen zweiten Raumvektorwinkeln eines zweiten Vektors und den ersten Raumvektorwinkeln beziehen und der zweite Vektor zwischen dem Brennpunkt und einer zweiten Position liegt, und

ein erstes Berechnungsmodul (430), das dazu konfiguriert ist, zweite räumliche Daten des Zielobjekts gemäß den ersten räumlichen Daten und den Positionsänderungsdaten zu berechnen, um die zweite Position eines zweiten Bildes des Zielobjekts auf dem Bildsensor zu bestimmen,
wobei das Fokussierungsmodul (440) ferner dazu konfiguriert ist, eine Autofokussierung auf das Zielobjekt gemäß den zweiten räumlichen Daten durchzuführen,
wobei das Erfassungsmodul (410) umfasst:

ein erstes Submodul (411) zur Berechnung des vertikalen Abstands, das dazu konfiguriert ist, einen ersten vertikalen Abstand zwischen dem Brennpunkt und dem Bildsensor zu berechnen, wobei das erste Bild des Zielobjekts auf dem Bildsensor erzeugt wird, wenn die erste Fokussierung beendet ist,
ein erstes Submodul (412) zur Erfassung von Raumkoordinaten, das dazu konfiguriert ist, die ersten Raumkoordinaten in einem dreidimensionalen rechtwinkligen Koordinatensystem mit dem Brennpunkt als Ursprung entsprechend dem ersten vertikalen Abstand zu erfassen, und
ein Submodul (413) zur Berechnung des ersten Raumvektorwinkels, das dazu konfiguriert ist, die ersten Raumvektorwinkel zu berechnen,
wobei das erste Submodul (411) zur Berechnung des vertikalen Abstands umfasst:

ein Bildabstandserfassungs-Submodul (4111), das dazu konfiguriert ist, einen Bildabstand zu erfassen, wenn die erste Fokussierung beendet ist, wobei der Bildabstand ein Abstand von dem ersten Bild des Zielobjekts zu dem Linsensatz ist, und

ein Differenzberechnungs-Submodul (4112), das dazu konfiguriert ist, eine Differenz zwischen dem Bildabstand und einer festen Brennweite als den ersten vertikalen Abstand zu berechnen, wobei das erste Submodul (412) zur Erfassung von Raumkoordinaten umfasst:

ein erstes zweidimensionales Koordinatenerfassungs-Submodul (4121), das dazu konfiguriert ist, erste zweidimensionale Koordinaten des Zielobjekts in einem rechtwinkligen ebenen Koordinatensystem zu erfassen, wobei ein Ursprung des rechtwinkligen ebenen Koordinatensystems ein Zentrum des Suchers ist und das Zentrum des Suchers und der Brennpunkt auf einer gleichen Linie senkrecht zu dem rechtwinkligen ebenen Koordinatensystem liegen,

ein zweites Submodul (4122) zur Erfassung zweidimensionaler Koordinaten, das dazu konfiguriert ist, die ersten zweidimensionalen Koordinaten gemäß einem voreingestellten Maßstab zu verschieben, um zweite zweidimensionale Koordinaten des ersten Bildes des Zielobjekts auf dem Bildsensor zu erfassen, und

ein erstes Submodul (4123) zur Bestimmung räumlicher Koordinaten, das dazu konfiguriert ist, die ersten räumlichen Koordinaten des ersten Bildes des Zielobjekts auf dem Bildsensor gemäß den zweiten zweidimensionalen Koordinaten und dem ersten vertikalen Abstand zu bestimmen, wobei eine X-Achsenkoordinate in den ersten räumlichen Koordinaten eine X-Achsenkoordinate in den zweiten zweidimensionalen Koordinaten ist, eine Y-Achsenkoordinate in den ersten räumlichen Koordinaten eine Y-Achsenkoordinate in den zweiten zweidimensionalen Koordinaten ist und eine Z-Achsenkoordinate in den ersten räumlichen Koordinaten der erste vertikale Abstand ist,

wobei die ersten Raumvektorwinkel einen in der X-Achse enthaltenen Winkel zwischen dem ersten Vektor und einer X-Achse des dreidimensionalen rechtwinkligen Koordinatensystems, einen in der Y-Achse enthaltenen Winkel zwischen dem ersten Vektor und einer Y-Achse des dreidimensionalen rechtwinkligen Koordinatensystems und einen in der Z-Achse enthaltenen Winkel zwischen dem ersten Vektor und einer Z-Achse des dreidimensionalen rechtwinkligen Koordinatensystems umfassen,

wobei die räumlichen Variationen von Vektorwinkeln eine X-Achsen-Winkelvariation auf der X-Achse, eine Y-Achsen-Winkelvariation auf der Y-Achse und eine Z-Achsen-Winkelvariation auf der Z-Achse umfassen.

7.  Autofokussierungsvorrichtung nach Anspruch 6, wobei das erste Berechnungsmodul (430) umfasst:

ein erstes Submodul (431) zur Berechnung eines geradlinigen Abstands, das dazu konfiguriert ist, einen ersten geradlinigen Abstand von dem Brennpunkt zu der ersten Position gemäß den ersten Raumkoordinaten zu berechnen,

ein zweites Submodul (432) zur Berechnung von Raumvektorwinkeln, das dazu konfiguriert ist, einen oder mehrere der zweiten Raumvektorwinkel gemäß einem oder mehreren der ersten Raumvektorwinkel und einer oder mehreren der Raumvariationen von Vektorwinkeln zu berechnen, und

ein zweites Submodul (433) zur Berechnung von Raumkoordinaten, das dazu konfiguriert ist, eine oder mehrere zweite Raumkoordinaten der zweiten Position gemäß dem ersten geradlinigen Abstand und dem einen oder den mehreren zweiten Raumvektorwinkeln zu berechnen.

8.  Autofokussierungsvorrichtung nach Anspruch 7, wobei das Fokussierungsmodul (440) umfasst:

ein zweites Submodul (441) zur Erfassung eines vertikalen Abstands, das dazu konfiguriert ist, einen zweiten vertikalen Abstand von dem Brennpunkt zu der zweiten Position gemäß den einen oder mehreren zweiten Raumkoordinaten zu erfassen, wobei der zweite vertikale Abstand eine Z-Achsenkoordinate in den einen oder mehreren zweiten Raumkoordinaten ist,

ein Submodul (442) zum Berechnen des angepassten Bildabstands, das dazu konfiguriert ist, eine Summe aus dem zweiten vertikalen Abstand und der festen Brennweite als angepassten Bildabstand zu berechnen, und

ein Submodul (443) zum Bewegen des Linsensatzes, das dazu konfiguriert ist, den Linsensatz zu bewegen, bis der Abstand zwischen dem Linsensatz und dem Bildsensor dem eingestellten Bildabstand entspricht.

9.  Autofokussierungsvorrichtung nach Anspruch 7 oder 8, wobei die Autofokussierungsvorrichtung ferner umfasst:

ein zweites Berechnungsmodul (450), das dazu konfiguriert ist, dritte räumliche Koordinaten der zweiten Position durch einen Bilderkennungsalgorithmus zu berechnen, und

ein Korrekturmodul (460), das dazu konfiguriert ist, die zweiten Raumkoordinaten entsprechend den dritten Raumkoordinaten zu korrigieren, um korrigierte zweite Raumkoordinaten zu erfassen.

**10.** Autofokussierungsvorrichtung nach Anspruch 9, wobei das Korrekturmodul (460) umfasst:

ein Korrekturschwellen-Beurteilungssubmodul (461), das dazu konfiguriert ist, zu beurteilen, ob ein Abstand zwischen den dritten Raumkoordinaten und den zweiten Raumkoordinaten kleiner als eine voreingestellte Korrekturschwelle ist, und

ein Submodul (462) zur Berechnung eines korrigierten Koordinatenwerts, das dazu konfiguriert ist, wenn der Abstand zwischen den dritten räumlichen Koordinaten und den zweiten räumlichen Koordinaten kleiner als die voreingestellte Korrekturschwelle ist, einen Mittelwert der X-Achsenkoordinaten in den dritten räumlichen Koordinaten und den zweiten räumlichen Koordinaten als eine X-Achsenkoordinate in den korrigierten zweiten räumlichen Koordinaten zu berechnen, einen Mittelwert der Y-Achsenkoordinaten in den dritten Raumkoordinaten und den zweiten Raumkoordinaten als Y-Achsenkoordinatenwert in den korrigierten zweiten Raumkoordinaten zu berechnen und eine Z-Achsenkoordinate in den korrigierten zweiten Raumkoordinaten gemäß dem ersten geradlinigen Abstand, der X-Achsenkoordinate in den korrigierten zweiten Raumkoordinaten und der Y-Achsenkoordinate in den korrigierten zweiten Raumkoordinaten zu berechnen.

**11.** Computerprogramm, das, wenn es von einem Prozessor einer Autofokussierungsvorrichtung ausgeführt wird, den Prozessor veranlasst, ein Verfahren nach einem der Ansprüche 1 bis 5 durchzuführen.

## Revendications

**1.** Procédé de mise au point automatique mis en œuvre par un terminal, comprenant :

la définition d'un point focal d'un ensemble de lentilles mobiles du terminal sur un objet cible par un utilisateur qui appuie sur ledit objet cible dans un viseur du terminal ; et

la réalisation d'une première mise au point sur l'objet cible sur la base du point focal pour former une première image de l'objet cible sur un capteur d'image du terminal ;

**caractérisé en ce que** ledit procédé de mise au point automatique comprend en outre :

lorsque la première mise au point est terminée, l'acquisition (101) de premières données spatiales de l'objet cible, dans lequel les premières données spatiales comprennent des premières coordonnées spatiales d'une première position de la première image de l'objet cible sur le capteur d'image et des premiers angles de vecteur spatial d'un premier vecteur, le premier vecteur se trouvant entre le point focal et la première position ;

l'estimation (204) permettant de savoir si le viseur se déplace grâce à des données d'accélération détectées par un capteur d'accélération ;

lors de la détection du fait que le viseur arrête de se déplacer après s'être déplacé en raison d'un déplacement du terminal, l'acquisition (102) de variations spatiales d'angles vectoriels détectées par un capteur de direction du terminal comme données de variation de position, dans lequel les variations spatiales d'angles vectoriels se réfèrent à des variations entre des deuxièmes angles de vecteur spatial d'un deuxième vecteur et les premiers angles de vecteur spatial, et le deuxième vecteur se trouve entre le point focal et une deuxième position ;

le calcul (103) de deuxièmes données spatiales de l'objet cible selon les premières données spatiales et les données de variation de position afin de déterminer la deuxième position d'une deuxième image de l'objet cible sur le capteur d'image ; et

la réalisation (104) d'une mise au point automatique sur l'objet cible selon les deuxièmes données spatiales, dans lequel la deuxième position est une position de la deuxième image de l'objet cible sur le capteur d'image quand la mise au point automatique est terminée ;

l'acquisition (101) des premières données spatiales de l'objet cible comprend :

le calcul (201) d'une première distance verticale entre le point focal et le capteur d'image, dans lequel la première image de l'objet cible est formée sur le capteur d'image lorsque la première mise au point est terminée ;

l'acquisition (202) des premières coordonnées spatiales dans un système de coordonnées rectangulaires tridimensionnelles avec le point focal comme origine selon la première distance verticale ; et
le calcul (203) des premiers angles de vecteur spatial ;
dans lequel le calcul (201) de la première distance verticale comprend :

l'acquisition d'une distance d'image lorsque la première mise au point est terminée, dans lequel la distance d'image est une distance entre la première image de l'objet cible et l'ensemble de lentilles ; et
le calcul d'une différence entre la distance d'image et une longueur focale fixe comme première distance verticale ;
dans lequel l'acquisition (202) des premières coordonnées spatiales selon la première distance verticale comprend :

avec un centre du viseur comme origine d'un système de coordonnées de plan rectangulaires, l'acquisition de premières coordonnées bidimensionnelles de l'objet cible dans le système de coordonnées de plan rectangulaires, dans lequel le centre du viseur et le point focal sont sur une même ligne normale au système de coordonnées de plan rectangulaires ;
la translation des premières coordonnées bidimensionnelles selon une échelle prédéfinie pour acquérir des deuxièmes coordonnées bidimensionnelles de la première image de l'objet cible sur le capteur d'image ; et
la détermination des premières coordonnées spatiales de la première image de l'objet cible sur le capteur d'image selon les deuxièmes coordonnées bidimensionnelles et la première distance verticale,
dans lequel une coordonnée de l'axe X dans les premières coordonnées spatiales est une coordonnée de l'axe X dans les deuxièmes coordonnées bidimensionnelles, une coordonnée de l'axe Y dans les premières coordonnées spatiales est une coordonnée de l'axe Y dans les deuxièmes coordonnées bidimensionnelles, et une coordonnée de l'axe Z dans les premières coordonnées spatiales est la première distance verticale ;
dans lequel lesdits premiers angles de vecteur spatial comportent un angle inclus dans l'axe X entre le premier vecteur et un axe X du système de coordonnées rectangulaires tridimensionnelles, un angle inclus dans l'axe Y entre le premier vecteur et un axe Y du système de coordonnées rectangulaires tridimensionnelles, et un angle inclus dans l'axe Z entre le premier vecteur et un axe Z du système de coordonnées rectangulaires tridimensionnelles ;
dans lequel les variations spatiales d'angles vectoriels comprennent une variation d'angle d'axe X sur l'axe X, une variation d'angle d'axe Y sur l'axe Y, et une variation d'angle d'axe Z sur l'axe Z.

2. Procédé selon la revendication 1, dans lequel le calcul (103) des deuxièmes données spatiales de l'objet cible selon les premières données spatiales et les données de variation de position comprend :

le calcul (206) d'une première distance en ligne droite entre le point focal et la première position selon les premières coordonnées spatiales ;
le calcul (207) d'un ou plusieurs des deuxièmes angles de vecteur spatial selon un ou plusieurs des premiers angles de vecteur spatial et une ou plusieurs des variations spatiales d'angles vectoriels ; et
le calcul (208) d'une ou plusieurs deuxièmes coordonnées spatiales de la deuxième position selon la première distance en ligne droite et les un ou plusieurs des deuxièmes angles de vecteur spatial.

3. Procédé selon la revendication 2, dans lequel la réalisation (104) de la mise au point automatique sur l'objet cible selon les deuxièmes données spatiales comprend :

l'acquisition (209) d'une deuxième distance verticale entre le point focal et la deuxième position selon les une ou plusieurs deuxièmes coordonnées spatiales, dans lequel la deuxième distance verticale est une coordonnée de l'axe Z dans les une ou plusieurs deuxièmes coordonnées spatiales ;
le calcul (210) d'une somme de la deuxième distance verticale et de la longueur focale fixe comme une distance d'image réglée ; et
le déplacement (211) de l'ensemble de lentilles jusqu'à ce qu'une distance entre l'ensemble de lentilles et le capteur d'image soit la distance d'image réglée.

**4.** Procédé selon la revendication 2 ou 3, dans lequel, avant de réaliser (104) la mise au point automatique sur l'objet cible selon les deuxièmes données spatiales, le procédé comprend :

le calcul de troisièmes coordonnées spatiales de la deuxième position grâce à un algorithme de reconnaissance d'image ; et
la correction des deuxièmes coordonnées spatiales selon les troisièmes coordonnées spatiales pour acquérir des deuxièmes coordonnées spatiales corrigées.

**5.** Procédé selon la revendication 4, dans lequel la correction des deuxièmes coordonnées spatiales selon les troisièmes coordonnées spatiales pour acquérir des deuxièmes coordonnées spatiales corrigées comprend :

l'estimation permettant de savoir si une distance entre les troisièmes coordonnées spatiales et les deuxièmes coordonnées spatiales est inférieure à un seuil de correction prédéfini ;
lorsque la distance entre les troisièmes coordonnées spatiales et les deuxièmes coordonnées spatiales est inférieure au seuil de correction prédéfini, le calcul d'une moyenne des coordonnées de l'axe X dans les troisièmes coordonnées spatiales et des deuxièmes coordonnées spatiales comme une coordonnée de l'axe X dans les deuxièmes coordonnées spatiales corrigées, et le calcul d'une moyenne des coordonnées de l'axe Y dans les troisièmes coordonnées spatiales et des deuxièmes coordonnées spatiales comme une valeur de coordonnée de l'axe Y dans les deuxièmes coordonnées spatiales corrigées ; et
le calcul d'une coordonnée de l'axe Z dans les deuxièmes coordonnées spatiales corrigées selon la première distance en ligne droite, la coordonnée de l'axe X dans les deuxièmes coordonnées spatiales corrigées et la coordonnée de l'axe Y dans les deuxièmes coordonnées spatiales corrigées.

**6.** Dispositif de mise au point automatique mis en œuvre dans un terminal, comprenant :

un module de mise au point (440) configuré pour :

- définir un point focal d'un ensemble de lentilles mobiles sur un objet cible, ledit point focal étant défini sur ledit objet cible par un utilisateur qui appuie sur ledit objet cible dans un viseur du terminal ; et
- réaliser une première mise au point sur l'objet cible pour former une image nette de l'objet cible sur un capteur d'image du terminal en déplaçant un ensemble de lentilles du terminal ;

ledit dispositif de mise au point automatique étant **caractérisé en ce qu'**il comprend en outre :

un module d'acquisition (410) configuré pour, lorsque la première mise au point est terminée, acquérir des premières données spatiales de l'objet cible, dans lequel les premières données spatiales comprennent des premières coordonnées spatiales d'une première position de la première image de l'objet cible sur le capteur d'image et des premiers angles de vecteur spatial d'un premier vecteur, le premier vecteur se trouvant entre le point focal et la première position ;
un module de détection (420) configuré pour :

- estimer si le viseur se déplace grâce à des données d'accélération détectées par un capteur d'accélération ; et
- lorsqu'il est détecté que le viseur arrête de se déplacer après s'être déplacé en raison d'un déplacement du terminal, acquérir des variations spatiales d'angles vectoriels détectées par un capteur de direction du terminal comme données de variation de position, dans lequel les variations spatiales d'angles vectoriels se réfèrent à des variations entre des deuxièmes angles de vecteur spatial d'un deuxième vecteur et les premiers angles de vecteur spatial, et le deuxième vecteur se trouve entre le point focal et une deuxième position ; et

un premier module de calcul (430) configuré pour calculer des deuxièmes données spatiales de l'objet cible selon les premières données spatiales et les données de variation de position afin de déterminer la deuxième position d'une deuxième image de l'objet cible sur le capteur d'image ;
dans lequel le module de mise au point (440) est en outre configuré pour réaliser une mise au point automatique sur l'objet cible selon les deuxièmes données spatiales ;
dans lequel le module d'acquisition (410) comprend :

un premier sous-module de calcul de distance verticale (411) configuré pour calculer une première distance verticale entre le point focal et le capteur d'image, dans lequel la première image de l'objet cible est formée sur le capteur d'image lorsque la première mise au point est terminée ;

un premier sous-module d'acquisition de coordonnées spatiales (412) configuré pour acquérir les premières coordonnées spatiales dans un système de coordonnées rectangulaires tridimensionnelles avec le point focal comme origine selon la première distance verticale ; et

un premier sous-module de calcul d'angle de vecteur spatial (413) configuré pour calculer les premiers angles de vecteur spatial ;

dans lequel le premier sous-module de calcul de distance verticale (411) comprend :

un sous-module d'acquisition de distance d'image (4111) configuré pour acquérir une distance d'image lorsque la première mise au point est terminée, dans lequel la distance d'image est une distance entre la première image de l'objet cible et l'ensemble de lentilles ; et

un sous-module de calcul de différence (4112) configuré pour calculer une différence entre la distance d'image et une longueur focale fixe comme première distance verticale ;

dans lequel le premier sous-module d'acquisition de coordonnées spatiales (412) comprend :

un premier sous-module d'acquisition de coordonnées bidimensionnelles (4121) configuré pour acquérir des premières coordonnées bidimensionnelles de l'objet cible dans un système de coordonnées de plan rectangulaires,

dans lequel une origine du système de coordonnées de plan rectangulaires est un centre du viseur, et le centre du viseur et le point focal sont sur une même ligne normale au système de coordonnées de plan rectangulaires ;

un deuxième sous-module d'acquisition de coordonnées bidimensionnelles (4122) configuré pour effectuer une translation des premières coordonnées bidimensionnelles selon une échelle prédéfinie pour acquérir des deuxièmes coordonnées bidimensionnelles de la première image de l'objet cible sur le capteur d'image ; et

un premier sous-module de détermination de coordonnées spatiales (4123) configuré pour déterminer les premières coordonnées spatiales de la première image de l'objet cible sur le capteur d'image selon les deuxièmes coordonnées bidimensionnelles et la première distance verticale, dans lequel une coordonnée de l'axe X dans les premières coordonnées spatiales est une coordonnée de l'axe X dans les deuxièmes coordonnées bidimensionnelles, une coordonnée de l'axe Y dans les premières coordonnées spatiales est une coordonnée de l'axe Y dans les deuxièmes coordonnées bidimensionnelles, et une coordonnée de l'axe Z dans les premières coordonnées spatiales est la première distance verticale ;

dans lequel les premiers angles de vecteur spatial comportent un angle inclus dans l'axe X entre le premier vecteur et un axe X du système de coordonnées rectangulaires tridimensionnelles, un angle inclus dans l'axe Y entre le premier vecteur et un axe Y du système de coordonnées rectangulaires tridimensionnelles, et un angle inclus dans l'axe Z entre le premier vecteur et un axe Z du système de coordonnées rectangulaires tridimensionnelles ;

dans lequel les variations spatiales d'angles vectoriels comprennent une variation d'angle d'axe X sur l'axe X, une variation d'angle d'axe Y sur l'axe Y, et une variation d'angle d'axe Z sur l'axe Z.

**7.** Dispositif de mise au point automatique selon la revendication 6, dans lequel le premier module de calcul (430) comprend :

un premier sous-module de calcul de distance en ligne droite (431) configuré pour calculer une première distance en ligne droite entre le point focal et la première position selon les premières coordonnées spatiales ;

un deuxième sous-module de calcul d'angle de vecteur spatial (432) configuré pour calculer un ou plusieurs des deuxièmes angles de vecteur spatial selon un ou plusieurs des premiers angles de vecteur spatial et une ou plusieurs des variations spatiales d'angles vectoriels ; et

un deuxième sous-module de calcul de coordonnées spatiales (433) configuré pour calculer une ou plusieurs deuxièmes coordonnées spatiales de la deuxième position selon la première distance en ligne droite et les un ou plusieurs des deuxièmes angles de vecteur spatial.

**8.** Dispositif de mise au point automatique selon la revendication 7, dans lequel le module de mise au point (440) comprend :

un deuxième sous-module d'acquisition de distance verticale (441) configuré pour acquérir une deuxième distance verticale entre le point focal et la deuxième position selon les une ou plusieurs deuxièmes coordonnées spatiales, dans lequel la deuxième distance verticale est une coordonnée de l'axe Z dans les une ou plusieurs deuxièmes coordonnées spatiales ;

un sous-module de calcul de distance d'image réglée (442) configuré pour calculer une somme de la deuxième distance verticale et de la longueur focale fixe comme une distance d'image réglée ; et

un sous-module de déplacement d'ensemble de lentilles (443) configuré pour déplacer l'ensemble de lentilles jusqu'à ce qu'une distance entre l'ensemble de lentilles et le capteur d'image soit la distance d'image réglée.

9. Dispositif de mise au point automatique selon la revendication 7 ou 8, dans lequel le dispositif de mise au point automatique comprend en outre :

un deuxième module de calcul (450) configuré pour calculer des troisièmes coordonnées spatiales de la deuxième position grâce à un algorithme de reconnaissance d'image ; et

un module de correction (460) configuré pour corriger les deuxièmes coordonnées spatiales selon les troisièmes coordonnées spatiales pour acquérir des deuxièmes coordonnées spatiales corrigées.

10. Dispositif de mise au point automatique selon la revendication 9, dans lequel le module de correction (460) comprend :

un sous-module d'estimation de seuil de correction (461) configuré pour estimer si une distance entre les troisièmes coordonnées spatiales et les deuxièmes coordonnées spatiales est inférieure à un seuil de correction prédéfini ; et

un sous-module de calcul de valeur de coordonnées corrigées (462) configuré pour, lorsque la distance entre les troisièmes coordonnées spatiales et les deuxièmes coordonnées spatiales est inférieure au seuil de correction prédéfini, calculer une moyenne des coordonnées de l'axe X dans les troisièmes coordonnées spatiales et les deuxièmes coordonnées spatiales comme une coordonnée de l'axe X dans les deuxièmes coordonnées spatiales corrigées, et calculer une moyenne des coordonnées de l'axe Y dans les troisièmes coordonnées spatiales et les deuxièmes coordonnées spatiales comme une valeur de coordonnée de l'axe Y dans les deuxièmes coordonnées spatiales corrigées, et calculer une coordonnée de l'axe Z dans les deuxièmes coordonnées spatiales corrigées selon la première distance en ligne droite, la coordonnée de l'axe X dans les deuxièmes coordonnées spatiales corrigées et la coordonnée de l'axe Y dans les deuxièmes coordonnées spatiales corrigées.

11. Programme informatique, qui, lorsqu'il est exécuté par un processeur d'un dispositif de mise au point automatique, amène le processeur à réaliser un procédé selon l'une quelconque des revendications 1 à 5.

When manual-focusing is finished through tapping a target object in a viewfinder by a user, acquire first spatial data of the target object ⟋⎯101

When it is detected that contents of a found view in the viewfinder change, acquire position variation data ⟋⎯102

Calculate second spatial data of the target object according to the first spatial data and the position variation data ⟋⎯103

Perform auto-focusing on the target object according to the second spatial data ⟋⎯104

Fig. 1

When manual-focusing is finished through tapping a target object in a viewfinder by a user, calculate a first vertical distance from a focal point to an image sensor ⟋201

↓

With the focal point as an origin of a three-dimensional rectangular coordinate system, acquire first spatial coordinates of a first position on the image sensor where an image of the target object is located at according to the first vertical distance ⟋202

↓

Calculate first space vector angles of a first vector between the focal point and the first position ⟋203

↓

Judge whether the viewfinder moves through acceleration data detected by an acceleration sensor ⟋204

↓

When the viewfinder moves, acquire space variations of vector angles detected through a direction sensor as the position variation data ⟋205

↓

Calculate a first straight-line distance from the focal point to the first position according to the first spatial coordinates ⟋206

↓

Calculate second space vector angles according to the first space vector angles and the space variations of vector angles ⟋207

↓

Calculate second spatial coordinates of a second position according to the first straight-line distance and the second space vector angles ⟋208

↓

Acquire a second vertical distance from the focal point to the second position according to the second spatial coordinates, the second vertical distance being the Z-axis coordinate value in the second spatial coordinates ⟋209

↓

Calculate the sum of the second vertical distance and the fixed focal length as an adjusted image distance ⟋210

↓

Move a lens set until a distance from the lens set to the image sensor is the adjusted image distance ⟋211

Fig. 2

Object Distance
(u)

Image Distance
(v)

Target
Object

Image of the
Target Object

Lens Set

Focal
Point

Image Sensor

Shooting
Target

Focal Length
(f)

d1

Fig. 3

Auto-focusing
Device        410                    440

Acquisition
Module

Focusing
Module

420                    430

Detection
Module

First Calculation
Module

Fig. 4

410

411

First Vertical Distance
Calculation
Submodule

Acquisition
Module

412                    413

First Spatial
Coordinate Acquisition
Submodule

First Space Vector
Angle Calculation
Submodule

Fig. 5

First Vertical Distance Calculation Submodule — 411

Image Distance Acquisition Submodule — 4111

Difference Calculation Submodule — 4112

Fig. 6

First Spatial Coordinate Acquisition Submodule — 412

First Two-dimensional Coordinate Acquisition Submodule — 4121

Second Two-dimensional Coordinate Acquisition Submodule — 4122

First Spatial Coordinate Determination Submodule — 4123

Fig. 7

Detection Module — 420

Acceleration Detection Submodule — 421

Variations of Vector Angles Acquisition Submodule — 422

Fig. 8

430

431

First Straight-line
Distance Calculation
Submodule

First Calculation
Module

432

Second Space Vector
Angle Calculation
Submodule

433

Second Spatial
Coordinate
Calculation
Submodule

Fig. 9

440

441

Second Vertical
Distance
Acquisition
Submodule

Focusing
Module

442

Adjusted Image
Distance
Calculation
Submodule

443

Lens Set Moving
Submodule

Fig. 10

Auto-Focusing
Device _____450                    _____460

Second Calculation
Module                          Correction Module

_____410                           _____440

Acquisition Module             Focusing Module

_____420                           _____430

Detection Module               First Calculation
                               Module

Fig. 11

_____460

Correction Module _____461

Correction Threshold
Judging Submodule

_____462

Corrected Coordinate
Value Calculation
Submodule

Fig. 12

1300

1304 — Memory

1302 — Processing Component

1320 — Processor

1316 — Communication Component

1306 — Power Component

1308 — Multimedia Component1

1310 — Audio Component

1314 — Sensor Component

1312 — Input/output (I/O) Interface

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010141826 A
- US 2014313339 A